# EUROPÄISCHE PATENTSCHRIFT

(11) **EP 3 302 925 B1**
(45) Veröffentlichungstag und Bekanntmachung des Hinweises auf die Patenterteilung: **26.10.2022**
(21) Anmeldenummer: 16723699.1
(22) Anmeldetag: 10.05.2016
(51) Int. Cl.: B29C 48/285, B29C 48/92, B29C 48/10, B29C 48/49, B29C 48/08, B29C 48/25

(54) **VERFAHREN FÜR DIE DURCHFÜHRUNG EINES MATERIALWECHSELS BEI EINER EXTRUSIONSVORRICHTUNG**
METHOD FOR CHANGING THE MATERIAL IN AN EXTRUSION DEVICE
PROCÉDÉ POUR RÉALISER UN CHANGEMENT DE MATIÈRE DANS UN DISPOSITIF D'EXTRUSION

(30) Priorität: 08.06.2015 DE 102015108978
(43) Veröffentlichungstag der Anmeldung: 11.04.2018
(73) Patentinhaber: Windmöller & Hölscher KG, 49525 Lengerich (DE)
(72) Erfinder: AVERMEYER, Ansgar, 49124 Georgsmarienhütte (DE); KULGEMEYER, Tobias, 49170 Hagen a.T.W. (DE); BUSSMANN, Markus, 45147 Essen (DE); MINNERUP, Jens, 48282 Emsdetten (DE); BACKMANN, Martin, 49525 Lengerich (DE)
(74) Vertreter: Bals & Vogel Patentanwälte PartGmbB
(86) Internationale Anmeldenummer: PCT/EP2016/060447
(87) Internationale Veröffentlichungsnummer: WO 2016/198224

(56) Entgegenhaltungen:
- EP-A2- 0 318 170
- EP-A2- 0 394 869
- DE-A1-102013 100 812
- JP-A- H0 724 899
- JP-A- S57 178 734

## Beschreibung

Die vorliegende Erfindung betrifft ein Verfahren für die Durchführung eines Materialwechsels bei einer Extrusionsvorrichtung mit zumindest zwei Vorlagevorrichtungen.

Es ist aus den Durchschriften EP 0 318 170 A2, JP S57 178734 A, EP 0 277 111 A1 und US 5 725 814 A bekannt, dass Extrusionsvorrichtungen eingesetzt werden, um Kunststofffolien oder andere Folienprodukte herzustellen. Dafür wird in den Extrusionsvorrichtungen eine Rezeptur aus unterschiedlichen Einsatzmaterialien aufgeschmolzen und vermischt und in flüssiger Form einem entsprechenden Spritzkopf oder Extrusionskopf zur Verfügung gestellt. Um zwischen unterschiedlichen Kunststofffolienarten, also unterschiedlichen Produkten, wechseln zu können, ist ein Materialwechsel erforderlich. Das bedeutet, dass ein Einsatzmaterial zumindest teilweise aus unterschiedlichen Vorlagevorrichtungen der Extrusionsvorrichtung entfernt werden muss, um es durch ein Folgematerial anderer Zusammensetzung oder anderer Materialbeschaffenheit zu ersetzen. Dieser Materialwechsel wird üblicherweise manuell durchgeführt.

Nachteilhaft bei den bekannten Lösungen ist es, dass der manuelle Wechsel des Materials einen hohen Zeitaufwand mit sich bringt. So ist es notwendig, dass ein Maschinenbediener von Vorlagevorrichtung zu Vorlagevorrichtung sequenziell arbeitet, und immer aus einer Vorlagevorrichtung das entsprechende Einsatzmaterial ablässt, um anschließend Folgematerial in diese leere Vorlagevorrichtung einzubringen. Dies führt dazu, dass ein sehr hoher Zeitaufwand gegeben ist, um sämtliche Vorlagevorrichtungen einer oder sogar mehrerer Extrusionsvorrichtungen von einem Einsatzmaterial bzw. einer Einsatzrezeptur auf eine Folgerezeptur zu bringen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise den Materialwechsel zu beschleunigen.

Voranstehende Aufgabe wird gelöst durch ein Verfahren mit den Merkmalen des Anspruchs 1. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren gemäß Hauptanspruch beschrieben sind, selbstverständlich auch im Zusammenhang mit dem erfindungsgemäßen Verfahren gemäß der Unteransprüche und jeweils umgekehrt, so dass bezüglich der Offenbarung zu den einzelnen Erfindungsaspekten stets wechselseitig Bezug genommen wird bzw. werden kann.

Erfindungsgemäß wird ein Verfahren vorgeschlagen für die Durchführung eines Materialwechsels bei einer Extrusionsvorrichtung mit zumindest zwei Vorlagevorrichtungen. Die Vorlagevorrichtungen dienen der Vorlage von Einsatzmaterial für einen Extruder. Ein erfindungsgemäßes Verfahren weist die folgenden Schritte auf:
- Erkennen einer Wechselanforderung für einen Materialwechsel bei der Extrusionsvorrichtung,
- Vorbereiten der Vorlagevorrichtung für den Materialwechsel,
- Abtrennen von wenigstens zwei Vorlagevorrichtungen von der Zufuhr von Einsatzmaterial zu dem Extruder,
- Ablassen von Einsatzmaterial aus den abgetrennten Vorlagevorrichtungen,
- Einfüllen von Folgematerial in die leeren Vorlagevorrichtungen, wobei die Schritte bei einer Produktionsmaschine mit zumindest vier Extrusionsvorrichtungen durchgeführt werden, wobei jede Extrusionsvorrichtung eine Schicht einer Kunststofffolie erzeugt, wobei als Vorbereitung der Vorlagevorrichtungen deren Füllstand auf einen Wechselfüllstand reduziert wird.

Ein erfindungsgemäßes Verfahren basiert also grundsätzlich ebenfalls auf einem zumindest teilweise manuell durchgeführten Materialwechsel für die einzelnen Vorlagevorrichtungen. Im Gegensatz zu den bekannten Lösungen ist jedoch nun ein paralleles Arbeiten vorgesehen. So wird nun erfindungsgemäß zumindest bei zwei Vorlagevorrichtungen gleichzeitig, insbesondere bei mehreren Vorlagevorrichtungen gleichzeitig, der Materialwechsel durchgeführt. Dies führt dazu, dass wenigstens zwei Vorlagevorrichtungen zur gleichen Zeit von der Zufuhr von Einsatzmaterial zu dem Extruder abgetrennt sind, so dass diese beiden oder auch mehrere Vorlagevorrichtungen parallel aus zeitlicher Sicht hinsichtlich des Materialwechsels bearbeitet werden können. Da insbesondere das Ablassen des Einsatzmaterials aus den abgetrennten Vorlagevorrichtungen eine relativ hohe Zeitdauer mit sich bringt, können auf diese Weise durch paralleles Arbeiten hohe Zeitgewinne erzielt werden. So ist es beispielsweise möglich, dass der Maschinenbediener zwei oder mehr Vorlagevorrichtungen gleichzeitig von der Zufuhr zum Extruder abtrennt und nun sequenziell nacheinander Ablassöffnungen der einzelnen Vorlagevorrichtungen öffnet. Aus diesen geöffneten Ablassöffnungen können nun aus allen geöffneten Vorlagevorrichtungen die Einsatzmaterialien herauslaufen, insbesondere durch Schwerkraftförderung, und in zugehörigen Ablassbehältern aufgefangen werden. Das Ablassen geschieht dabei im Wesentlichen vollständig selbstständig, ohne, dass der Maschinenbediener dabei neben der Anlage bzw. neben dieser expliziten Vorlagevorrichtung stehen muss. Dies führt also dazu, dass parallel aus zwei oder mehr Vorlagevorrichtungen der Ablassvorgang des Einsatzmaterials stattfinden kann. Da häufig bei großen Mengen an Einsatzmaterial in den Vorlagevorrichtungen das Ablassen des Einsatzmaterials eine der größten Zeitkomponenten für den Materialwechsel darstellt, bringt eine derartige Parallelisierung einen sehr großen Zeitvorteil für die Durchführung des Materialwechsels mit sich. Insbesondere kann dabei die Zeit für den Materialwechsel auf ein Minimum von circa 10 % des ansonsten üblichen Zeitbedarfs für den Materialwechsel reduziert werden.

Der Vorbereitungsschritt für die Vorlagevorrichtung für den Materialwechsel kann dabei in unterschiedlichster Weise ausgestaltet sein. Insbesondere handelt es sich dabei um eine Beeinflussung des Füllstandes der jeweiligen Vorlagevorrichtung, insbesondere mit Bezug auf eine Reduktion des Füllstandes. Dies wird später noch näher erläutert. Sobald das Einsatzmaterial abgelassen wird, kann bei entsprechenden Ausgestaltungsformen der Vorlagevorrichtungen bereits zu diesem Zeitpunkt ein teilweises Nachfüllen mit Folgematerial erfolgen. So können Vorlagevorrichtungen insbesondere dreiteilig aufgebaut sein, mit einem Wägetrichter, einem darüber angeordneten Fallrohr und einem wiederum über dem Fallrohr angeordneten Vorlagebehälter. Üblicherweise ist bei einer solchen Ausführungsform der Vorlagebehälter dann mit einer entsprechenden Klappe verschlossen, um ein Nachfüllen in dem Vorlagebehälter unabhängig von den darunter angeordneten Bauteilen durchführen zu können. Mit anderen Worten kann, sobald der Vorlagebehälter frei von Einsatzmaterial ist, ein Nachfüllen von Folgematerial in den Vorlagebehälter erfolgen, während zum gleichen Zeitpunkt sich unterhalb des Vorlagebehälters noch Einsatzmaterial in dem Ablassprozess befindet. Dies erlaubt es eine noch weitergehende Parallelisierung der einzelnen Schritte für einen Materialwechsel zur Verfügung zu stellen, so dass auf diese Weise der Zeitgewinn noch deutlicher zutage tritt. Ein weiterer Vorteil, welcher neben dem Zeitgewinn durch paralleles Arbeiten erzielbar wird, ist eine Reduktion der Gefahr des Leerlaufens des Extruders. So ist sichergestellt, dass insbesondere durch ein Einfüllen von Folgematerial in einen Vorlagebehälter zu einem besonders frühen Zeitpunkt, in einer Notsituation, welche das Risiko des Leerlaufens des Extruders beinhaltet, sehr schnell wieder Material dem Extruder zugeführt wird. Ein Leerlaufen des Extruders stellt eine der schwierigsten Situationen dar, da in einem solchen Fall sehr aufwendig eine Reinigung des immer noch heißen, aber leergelaufenen Extruders durchgeführt werden muss. Insbesondere sind auf diese Weise sogar irreversible Schäden an einem Extruder möglich, wenn dieser nicht mehr mit Einsatzmaterial oder Folgematerial bestückt wird, sich jedoch noch auf Betriebstemperatur befindet.

Es ist von Vorteil wenn bei einem erfindungsgemäßen Verfahren als Vorbereitung der Vorlagevorrichtungen deren Füllstand auf einen Wechselfüllstand reduziert wird.

Darunter ist zu verstehen, dass ein Betriebsfüllstand üblicherweise die größtmögliche Pufferwirkung für den Normalbetrieb innerhalb der Vorlagevorrichtung darstellt. So können eine Vorlagevorrichtung und die darin enthaltenen Bauteile insbesondere im Wesentlichen vollständig mit Einsatzmaterial gefüllt sein, solange es sich um die normale Betriebssituation handelt. Wird nun eine Vorbereitungshandlung gewünscht, so wird im Rahmen eines erfindungsgemäßen Verfahrens vorzugsweise der Füllstand von diesem Betriebsfüllstand abgesenkt auf einen Wechselfüllstand, der dementsprechend niedriger ausgebildet ist als der Betriebsfüllstand. Dies führt dazu, dass zum Zeitpunkt des Materialwechsels, also für das Ablassen des Einsatzmaterials aus der jeweiligen Vorlagevorrichtung, deutlich weniger Einsatzmaterial in dieser zugehörigen Vorlagevorrichtung vorhanden ist. Dies bringt insbesondere zwei entscheidende Vorteile mit sich. So ist zum einen das Volumen und damit die Gesamtmenge an Einsatzmaterial, welche abgelassen werden muss, deutlich geringer, so dass weniger Abfall entsteht. Darüber hinaus ist die Menge, welche an Einsatzmaterial abgelassen werden muss, direkt proportional zu der Zeit, die für diesen Ablassprozess des Einsatzmaterials notwendig ist. Die Reduktion des Füllstandes innerhalb der Vorlagevorrichtung auf den Wechselfüllstand führt also dazu, dass weniger Einsatzmaterial und dementsprechend auch mit weniger Zeit aus der Vorlagevorrichtung abgelassen werden muss. Neben der bereits angesprochenen Parallelisierung der einzelnen Ablassschritte durch das gleichzeitige Bearbeiten von zwei oder mehr Vorlagevorrichtungen kann auf diese Weise eine zusätzliche Zeitreduktion für den Materialwechsel erzielt werden, da der Zeitbedarf für das tatsächliche Ablassen der jeweiligen Vorlagevorrichtung ebenfalls reduzierbar ist. Die Reduktion auf den Wechselfüllstand kann dabei sowohl automatisch, als auch in manueller Weise aktivierbar ausgestaltet sein. Selbstverständlich kann auch eine weitere Füllstandsreduktion auf einen sogenannten Minimalfüllstand erfolgen, welcher noch unterhalb des Wechselfüllstandes liegt. Dabei ist zu beachten, dass die Pufferwirkung des Restmaterials an Einsatzmaterial in der jeweiligen Vorlagevorrichtung durch die Reduktion des Füllstandes selbstverständlich reduziert wird. Da jedoch zum Zeitpunkt des Materialwechsels in jedem Fall ein Maschinenbediener sich üblicherweise direkt neben der jeweiligen Extrusionsvorrichtung befindet, kann diese Reduktion der Pufferwirkung in Kauf genommen werden, da eine schnelle Reaktionsgeschwindigkeit durch eine schnelle Erkennungsgeschwindigkeit des Maschinenbedieners hinsichtlich Problemen an der Extrusionsvorrichtung besteht.

Ein weiterer Vorteil ist es, wenn bei einem erfindungsgemäßen Verfahren für die Vorbereitung der Vorlagevorrichtungen ein Ablassbehälter gereinigt und an einer Behälterschnittstelle der jeweiligen Vorlagevorrichtung befestigt wird. Ein solcher Ablassbehälter dient dementsprechend dem Aufnehmen des abgelassenen Einsatzmaterials. Alternativ oder zusätzlich ist es auch denkbar, dass anstelle des Ablassbehälters ein Rückführschlauch an einer zugehörigen Behälterschnittstelle befestigt wird, welcher das abgelassene Einsatzmaterial in eine Lagervorrichtung, zum Beispiel ein Silo, zurückführt. Das Vorbereiten des entsprechenden Ablassbehälters bzw. eines Rückführschlauches kann selbstverständlich auch direkt nach dem jeweiligen Wechsel zur Verfügung gestellt werden, so dass für den kommenden Wechsel der Ablassbehälter bzw. der Rückführschlauch bereits in der aufnahmefähigen Position und Ausbildung vorliegt. So kann beispielsweise nach dem Ablassen von Einsatzmaterial in einen Ablassbehälter dieser direkt im Anschluss an den Materialwechsel ausgeleert werden. Der nun leere Ablassbehälter wird wieder an der Behälterschnittstelle der jeweiligen Vorlagevorrichtung befestigt und ist somit nun bereit für den nachfolgend durchzuführenden Materialwechsel. Dieser Vorbereitungsschritt erlaubt es, andere Schritte des Materialwechsels, insbesondere das Öffnen einer Ablassöffnung bzw. das entsprechende Ablassen des Einsatzmaterials, vorzugsweise vollständig zu automatisieren. So kann durch diese Lösung eines erfindungsgemäßen Verfahrens sogar der Start des Materialwechsels nach Erkennen eines Endes eines Produktionszeitraums einer Kunststofffolie insbesondere automatisch gestartet werden. Bevorzugt ist dies insbesondere dann, wenn durch einen einzigen Maschinenbediener eine Vielzahl von Produktionsanlagen parallel betreut werden soll, so dass für die kritische Situation eines Materialwechsel die Durchführung des Materialwechsels bis hin zur Produktionsfähigkeit mit einer Folgerezeptur im Wesentlichen vollautomatisch durchgeführt werden kann. Dabei ist es selbstverständlich möglich, dass für eine solche automatisierte Durchführung über entsprechende Sensoren die tatsächliche Gegebenheit überprüft wird. So kann das Vorhandensein des Ablassbehälters sowie die Art und Ausbildung des Ablassbehälters über eine solche Sensorik erkannt werden. Auch ist es möglich, dass die Reinigung des Ablassbehälters bzw. dessen leere Ausbildungsform auf diese Weise erkennbar ist.

Es kann weiter von Vorteil sein, wenn bei einem erfindungsgemäßen Verfahren die Schritte des Erkennens, des Vorbereitens, des Abtrennens, des Ablassens und/oder des Einfüllens automatisch durchgeführt werden, auf Basis einer manuellen oder einer automatischen Aktivierung. Darunter ist zu verstehen, dass, wie im voranstehenden Absatz bereits erläutert worden ist, zumindest Teile des Materialwechsels automatisiert durchgeführt werden. Dies bezieht sich insbesondere auf die Schritte des Materialwechsels, welche dazu führen, dass Einsatzmaterial durch das Folgematerial soweit ausgetauscht worden ist, dass nunmehr das Folgematerial über die Vorlagevorrichtungen wieder dem Extruder zugeführt werden kann. Dies führt dazu, dass zum Zeitpunkt des Materialwechsels ein im Wesentlichen vollständiger Automatismus ablaufen kann, und der Maschinenbediener dementsprechend den Materialwechsel nur noch nachbearbeiten muss. Diese Nacharbeit ist vorzugsweise ohne Einfluss auf die Produktion mit der Folgerezeptur bzw. mit den Folgematerialien aus der jeweiligen Vorlagevorrichtung. Dies erlaubt es, zum Beispiel mithilfe von Schaltflächen an einer Anzeigevorrichtung, eine Überwachung, Steuerung, Auslösung oder auch Ansicht des automatisch ablaufenden Verfahrens zur Verfügung zu stellen.

Ein weiterer Vorteil ist es, wenn bei einem erfindungsgemäßen Verfahren die Schritte bei einer Produktionsmaschine mit zumindest zwei Extrusionsvorrichtungen durchgeführt werden, wobei jede Extrusionsvorrichtung eine Schicht der Kunststofffolie erzeugt. Bevorzugt ist es, wenn die Schritte bei einer Produktionsmaschine mit zumindest drei Extrusionsvorrichtungen durchgeführt werden. Die Schritte werden bei einer Produktionsmaschine mit zumindest vier Extrusionsvorrichtungen durchgeführt. Dies ist insbesondere dann der Fall, wenn komplexe Kunststofffolien erzeugt werden sollen, insbesondere in einem sogenannten Castfolienverfahren bzw. einem Blasfolienverfahren. Je größer die Komplexität der Produktionsmaschine ist, also je mehr Extrusionsvorrichtungen eingesetzt sind, umso komplexer ist auch die Aufgabe der Durchführung des Materialwechsels. Bei derart komplexen Ausführungsformen der zugehörigen Produktionsmaschine bringt dementsprechend ein erfindungsgemäßes Verfahren noch deutlicher die Vorteile mit sich, wie sie bereits erläutert worden sind.

Ein weiterer Vorteil ist erzielbar, wenn bei einem erfindungsgemäßen Verfahren nach der Erkennung der Wechselanforderung eine Analyse aller Einsatzmaterialien und aller Folgematerialien erfolgt, auf deren Basis eine Wechselreihenfolge ausgegeben wird, welche die Durchführungsreihenfolge für die einzelnen Extrusionsvorrichtungen und/oder die einzelnen Vorlagevorrichtungen der Extrusionsvorrichtungen vorgibt. Eine solche Wechselreihenfolge kann auch als Wechselstrategie bezeichnet werden und wird insbesondere automatisiert bzw. teilautomatisiert ausgegeben. Dabei kann eine solche Wechselreihenfolge unterschiedlichste Merkmale berücksichtigen. Ein entscheidender Faktor kann die Produktionsstabilität sein, welche bei einer Blasfolienmaschine die Blasenstabilität der erzeugten Kunststoffblase ist. Auch andere Priorisierungsparameter sind denkbar. So ist beispielsweise die Geschwindigkeit des Ausbringens der Einsatzmaterialien, insbesondere beim Einsatz von Farbpigmenten, ein wesentlicher Bestandteil. So kann beispielsweise bei der Wechselstrategie berücksichtigt werden, dass die Spülzeit eine Reduktion erfährt. So sind manche Materialien hinsichtlich ihrer Viskosität leichter ausspülbar als andere Materialien. So sind insbesondere Einsatzmaterialien, deren Spülzeit besonders lang ist, als eine der ersten hinsichtlich des Materialwechsels zu bearbeiten. Dies führt dazu, dass durch die Automatisierungsmöglichkeiten eines erfindungsgemäßen Verfahrens zeitintensive Schritte vorgezogen werden können, so dass je nach dem entsprechenden Wunsch und Priorisierungsmerkmal für die Wechselstrategie eine verbesserte Bearbeitung des Materialwechsels ermöglicht wird.

Ein weiterer Vorteil ist es, wenn bei einem erfindungsgemäßen Verfahren nach dem Ablassen des Einsatzmaterials aus den abgetrennten Vorlagevorrichtungen ein Reinigungsschritt, insbesondere in Form eines Reinigungsprogramms einer Reinigungsvorrichtung, durchgeführt wird. Auch eine manuelle Reinigung ist dabei möglich. Insbesondere ist jedoch eine Reinigungsvorrichtung innerhalb der Vorlagevorrichtungen vorgesehen, welche entsprechende Reinigungsschritte durchführen kann. Eine solche Reinigungsvorrichtung kann zum Beispiel Reinigungsmittel aufweisen, welche insbesondere mittels Luftdruckdüsen entsprechende Reinigungsschritte durchführen. Dabei erfolgt vorzugsweise ein Abtrennen von oben nach unten, nachdem das Ablassen des Einsatzmaterials stattgefunden hat. Dies führt dazu, dass unerwünschte Restkontaminationen von Restgranulat an Einsatzmaterial aus der jeweiligen Vorlagevorrichtung abgereinigt werden können, so dass noch sortenreiner die jeweilige Produktion starten kann. Insbesondere für den Beginn eines nachfolgenden Produktionsschrittes einer Folgerezeptur bringt dies große Vorteile mit sich, da auf diese Weise das Restrisiko einer Ausschussproduktion deutlich reduziert werden kann.

Ein weiterer Vorteil kann es sein, wenn bei einem erfindungsgemäßen Verfahren als Vorbereitung der Vorlagevorrichtung für den Materialwechsel das Folgematerial, insbesondere in Form einer Gebindevorlage, zur Extrusionsvorrichtung gebracht wird. Alternativ dazu sind auch Silospeicherungen oder andere Lagervorrichtungen denkbar. Ein entsprechender Anschluss kann zum Beispiel durch eine in ein Gebinde eingesteckte Lanze zur Verfügung gestellt werden. Auch Transportschläuche für die Verbindung mit einem jeweiligen Silo bzw. einer Lagervorrichtung sind bei dieser Ausführungsform der vorliegenden Erfindung denkbar.

Ein weiterer Vorteil ist es, wenn bei einem erfindungsgemäßen Verfahren für alle Vorlagevorrichtungen einer Extrusionsvorrichtung bis auf eine letzte Vorlagevorrichtung zeitlich wenigstens abschnittsweise parallel der Materialwechsel durchgeführt wird. So wird ein Leerlauf des Extruders besonders wirksam vermieden, da insbesondere eine Hauptkomponente, welche hinsichtlich der Zufuhrgeschwindigkeit und des Zufuhrvolumens den größten Anteil an der jeweiligen Einsatzrezeptur ausmacht, weiterläuft, während alle anderen Vorlagevorrichtungen hinsichtlich des Materialwechsels bearbeitet werden. Dies führt dazu, dass ein Leerlaufen des Extruders und auch ein Abreißen einer Kunststofffolie im Produktionsprozess mit hoher Wahrscheinlichkeit vermieden wird. Diese Strategie ist insbesondere mit der Wechselreihenfolge kombiniert, wie sie bereits erläutert worden ist. Auch kann auf diese Weise die Parallelität noch weiter gesteigert werden, so dass auf diese Weise die Zeitersparnis noch weiter zutage tritt.

Ebenfalls von Vorteil ist es, wenn bei einem erfindungsgemäßen Verfahren nach dem Ablassen des Einsatzmaterials ein Abschlusssignal gegeben wird, welches dem Bedienpersonal den Abschluss des Ablassens anzeigt. Dies ist insbesondere dann vorteilhaft, wenn nach dem Ablassen ein manueller Schritt, zum Beispiel das Entfernen eines gefüllten Ablassbehälters, durchgeführt werden soll. Ein solches Abschlusssignal ist insbesondere sensorisch durch den Maschinenbediener wahrnehmbar. Bevorzugt sind dabei optische und/oder akustische Abschlusssignale. So sind beispielsweise LEDs an Lanzen oder Saugschläuchen einsetzbar, welche ein entsprechendes Abschlusssignal für das Ablassen der jeweiligen Vorlagevorrichtung geben können. Dabei können selbstverständlich rein quantitative Darstellungen oder auch qualitative Darstellungen gewählt werden. Insbesondere ist auch eine Rückmeldung über die Korrektheit der durchgeführten Schritte bei der Durchführung des Materialwechsels im Rahmen der vorliegenden Erfindung denkbar.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine erste Ausführungsform einer erfindungsgemäßen Extrusionsvorrichtung im Betriebszustand,
- Fig. 2: die Ausführungsform der Fig. 1 während einem Absenken der Füllstände,
- Fig. 3: die Ausführungsform der Fig. 1 und 2 mit einem Füllstand auf Wechselfüllstandsniveau,
- Fig. 4: die Ausführungsformen der Fig. 1 bis 3 mit einem schwankenden Füllstand, welcher auf Wechselfüllstandsniveau gehalten wird,
- Fig. 5: die Ausführungsform der Fig. 1 bis 4 während einer Reinigungssituation,
- Fig. 6: die Ausführungsform der Fig. 1 bis 5 während des Nachfüllens mit einem Folgematerial und
- Fig. 7: eine alternative Ausführungsform einer Extrusionsvorrichtung.

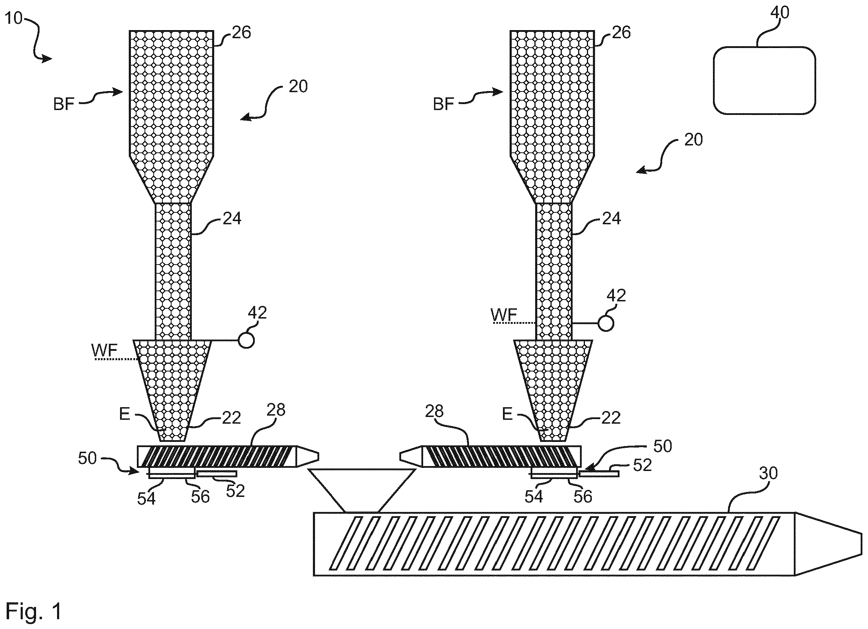

In Fig. 1 bis 6 ist schematisch eine Extrusionsvorrichtung 10 dargestellt, welche mit zwei Vorlagevorrichtungen 20 ausgestattet ist. Jede dieser Vorlagevorrichtungen 20 ist mit einem Vorlagebehälter 26, einem Fallrohr 24 und einem Wägetrichter 22 ausgestattet. Fig. 1 zeigt die Betriebssituation, wobei jede Vorlagevorrichtung 20 bis zu einem vollen Betriebsfüllstand BF mit einem Einsatzmaterial E befüllt ist. In diesem Zustand wird über Dosierschnecken 28 das jeweilige Einsatzmaterial E einem Extruder 30 zugeführt und von dort für die Produktion der Kunststofffolie verwendet. Ein erfindungsgemäßes Verfahren wird dabei in einer zugehörigen Kontrollvorrichtung 40 ausgeführt.

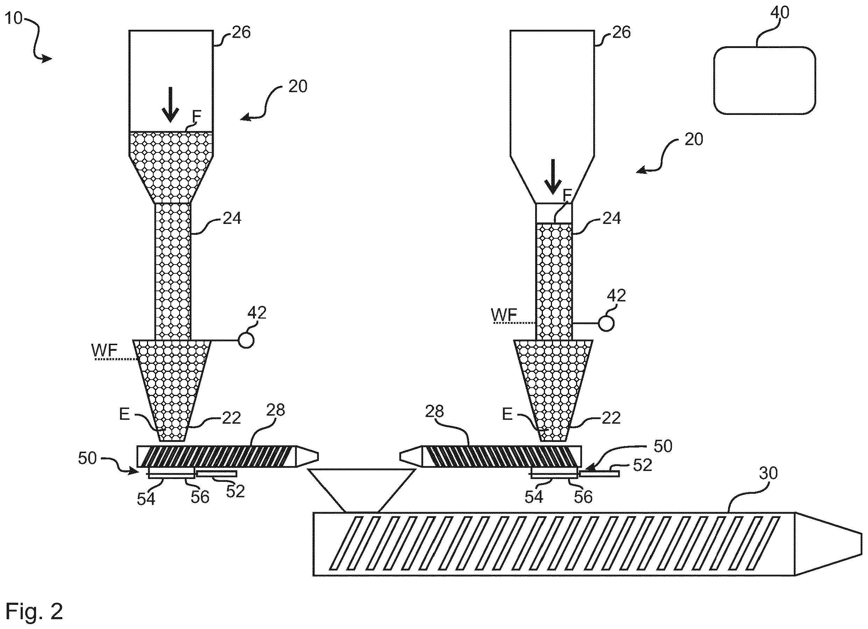

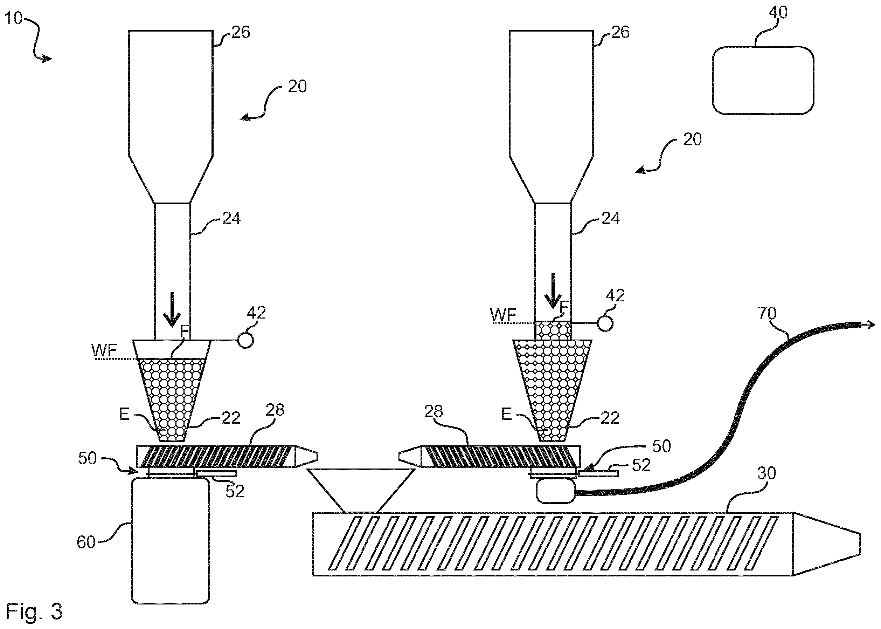

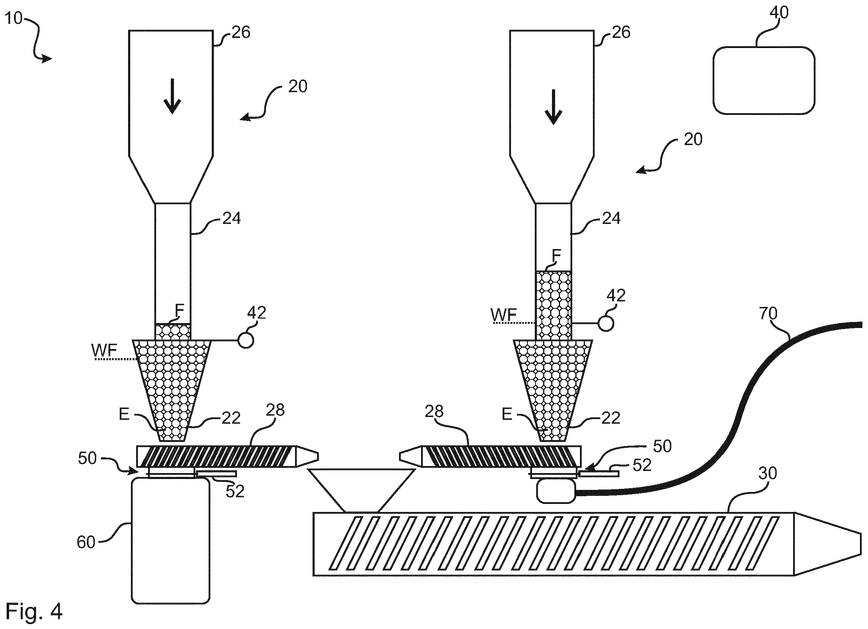

Als Vorbereitung auf einen Materialwechsel zeigt Fig. 2, wie ein Absenken der Füllstände F der Einsatzmaterialien E erfolgt. Durch weitere Produktion ohne Nachfüllen in die Vorlagevorrichtungen 20 sinkt nun der Füllstand F ab, bis er einen Wechselfüllstand WF gemäß der Fig. 3 erreicht. Um diesen Wechselfüllstand WF nicht zu unterschreiten, sind entsprechende Füllstandssensoren 42 vorgesehen, so dass zum Zeitpunkt gemäß Fig. 3 ein kurzes Nachfüllen in Form eines Nachfüllschubes erfolgt, so dass im Wesentlichen ein schwankendes Halten des Füllstandes F auf dem Stand gemäß der Fig. 3 und 4 erfolgt.

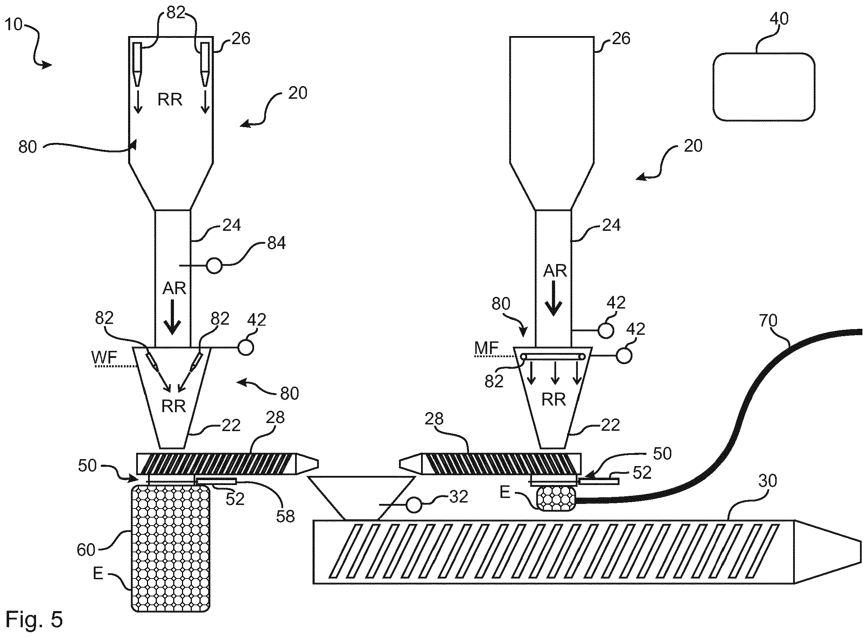

Fig. 5 zeigt, wie zum Zeitpunkt des tatsächlichen Materialwechsels das Einsatzmaterial E aus den Vorlagevorrichtungen 20 komplett nach unten abgelassen werden kann. Das Auffangen kann sowohl in einem Ablassbehälter 60 als auch mithilfe einer Rückführvorrichtung 70 erfolgen. Für das Ablassen sind hier Ablassöffnungen 50 vorgesehen, die mit einem Ablassverschluss 52 geschlossen sind. Über eine Behälterschnittstelle 54 ist die entsprechende Anordnung der Ablassbehälter 60 möglich. Nicht zuletzt ist ein Öffnungssensor 58 vorgesehen, welcher insbesondere bei einem durchzuführenden Reinigungsschritt mit einer Reinigungsvorrichtung 80 mit einer Vielzahl von Reinigungsmitteln 82 einsetzbar ist.

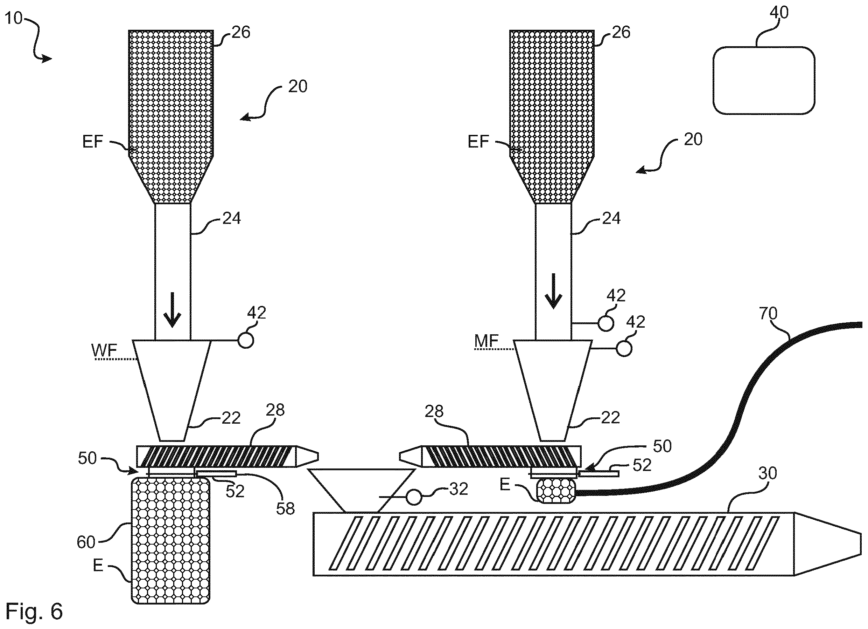

In Fig. 6 ist dargestellt, wie zu diesem Zeitpunkt ein Folgematerial EF bereits wieder in die Vorlagebehälter 26 der Vorlagevorrichtungen 20 eingefüllt werden kann, so dass nachfolgend besonders schnell und mit geringer Vermischung das Umschalten zwischen dem Einsatzmaterial F und dem Folgematerial EF erfolgen kann.

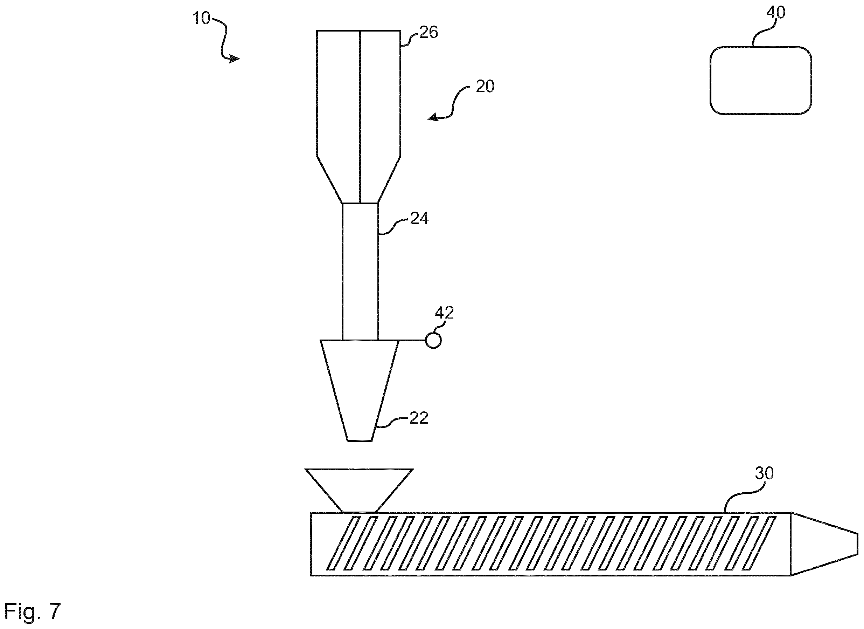

Die Fig. 7 zeigt eine alternative Ausführungsform einer Extrusionsvorrichtung 10. Diese basiert hinsichtlich der erfindungsgemäß beschriebenen Vorteile auf der Ausführungsform der Fig. 1, unterscheidet sich jedoch durch die Nachfüllfunktion. So ist hier ein sogenannter Batch-Prozess für das Nachfüllen vorgesehen. Der Vorlagebehälter 26 ist mit getrennten Volumina ausgestattet, so dass jedes Volumina des Vorlagebehälters 26 als eine Vorlagevorrichtung 20 verstanden werden kann. Darunter angeordnete Bauteile in Form des Fallrohrs 24 und des Wägetrichters 22 sind somit gemeinsame Bauteile der unterschiedlichen Vorlagevorrichtungen 20. Unterhalb des Wägetrichters 22 ist ein Mischtrichter, insbesondere mit einem Mischerantrieb, vorgesehen, welcher eine Homogenisierung vor dem Eintritt in den Extruder erlaubt.

### Bezugszeichenliste

- 10: Extrusionsvorrichtung
- 20: Vorlagevorrichtung
- 22: Wägetrichter
- 23: Trichteröffnung
- 24: Fallrohr
- 26: Vorlagebehälter
- 28: Dosierschnecke
- 30: Extruder
- 32: Notsensor
- 40: Kontrollvorrichtung
- 42: Füllstandssensor
- 50: Ablassöffnung
- 52: Ablassverschluss
- 54: Behälterschnittstelle
- 56: Sensorvorrichtung
- 58: Öffnungssensor
- 60: Ablassbehälter
- 62: Ablassvolumen
- 70: Rückführvorrichtung
- 80: Reinigungsvorrichtung
- 82: Reinigungsmittel
- 84: Staubsensor

- E: Einsatzmaterial
- EF: Folgematerial
- BF: Betriebsfüllstand
- WF: Wechselfüllstand
- F: Füllstand
- RR: Reinigungsrichtung
- AR: Ablassrichtung

## Patentansprüche

1. Verfahren für die Durchführung eines Materialwechsels bei einer Extrusionsvorrichtung (10) mit zumindest zwei Vorlagevorrichtungen (20) für die Vorlage von Einsatzmaterial (E) für einen Extruder (30), aufweisend die folgenden Schritte:
- Erkennen einer Wechselanforderung für einen Materialwechsel bei der Extrusionsvorrichtung (10),
- Vorbereiten der Vorlagevorrichtungen (20) für den Materialwechsel,
- Abtrennen von wenigstens zwei Voriagevorrichtung (20) von der Zufuhr von Einsatzmaterial (E) zu dem Extruder (30),
- Ablassen von Einsatzmaterial (E) aus den abgetrennten Vorlagevorrichtungen (20),
- Einfüllen von Folgematerial (EF) in die leeren Vorlagevorrichtungen (20),
**dadurch gekennzeichnet, dass**
die Schritte bei einer Produktionsmaschine mit zumindest vier Extrusionsvorrichtungen (10) durchgeführt werden, wobei jede Extrusionsvorrichtung (10) eine Schicht einer Kunststofffolie erzeugt, wobei
als Vorbereitung der Vorlagevorrichtungen (20) deren Füllstand auf einen Wechselfüllstand (WF) reduziert wird.

2. Verfahren nach Anspruch 1,
**dadurch gekennzeichnet,**
**dass** für die Vorbereitung der Vorlagevorrichtungen (20) ein Ablassbehälter (60) gereinigt und an einer Behälterschnittstelle (54) der jeweiligen Vorlagevorrichtung (20) befestigt wird.

3. Verfahren nach einem der vorangegangenen Ansprüche,
**dadurch gekennzeichnet,**
**dass** die Schritte des Erkennens, des Vorbereitens, des Abtrennens, des Ablassens und/oder des Einfüllens automatisch durchgeführt werden auf Basis einer manuellen oder einer automatischen Aktivierung.

4. Verfahren nach Anspruch 3,
**dadurch gekennzeichnet,**
**dass** nach der Erkennung der Wechselanforderung eine Analyse aller Einsatzmaterialen (E) und aller Folgematerialien (EF) erfolgt, auf deren Basis eine Wechselreihenfolge ausgegeben wird, welche die Durchführungsreihenfolge für die einzelnen Extrusionsvorrichtungen (10) und/oder die einzelnen Vorlagevorrichtungen (20) der Extrusionsvorrichtungen (10) vorgibt.

5. Verfahren nach einem der vorangegangenen Ansprüche,
**dadurch gekennzeichnet,**
**dass** nach dem Ablassen des Einsatzmaterials (E) aus den abgetrennten Vorlagevorrichtungen (20) ein Reinigungsschritt, insbesondere in Form eines Reinigungsprogramms einer Reinigungsvorrichtung (80), durchgeführt wird.

6. Verfahren nach einem der vorangegangenen Ansprüche,
**dadurch gekennzeichnet,**
**dass** als Vorbereitung der Vorlagevorrichtungen (20) für den Materialwechsel das Folgematerial (EF), insbesondere in Form einer Gebindevorlage, zur Extrusionsvorrichtung (10) gebracht wird.

7. Verfahren nach einem der vorangegangenen Ansprüche,
**dadurch gekennzeichnet,**
**dass** für alle Vorlagevorrichtungen (20) einer Extrusionsvorrichtung (10) bis auf eine letzte Vorlagevorrichtung (20) zeitlich wenigstens abschnittsweise parallel der Materialwechsel durchgeführt wird.

8. Verfahren nach einem der vorangegangenen Ansprüche,
**dadurch gekennzeichnet,**
**dass** nach dem Ablassen des Einsatzmaterials (E) ein Abschlusssignal gegeben wird, welches dem Bedienpersonal den Abschluss des Ablassens anzeigt.

## Claims

1. A method for carrying out a material change in an extrusion device (10) with at least two supply devices (20) for supplying input material (E) for an extruder (30), comprising the following steps:
- Detecting a change request for a material change in the extrusion device (10),
- preparing the supply devices (20) for the material change,
- separating at least two supply devices (20) from the feed of input material (E) to the extruder (30),
- discharging the input material (E) from the separated supply devices (20),
- filling a subsequent material (EF) into the empty supply devices (20),
**characterized in that**
the steps are carried out in a production machine with at least four extrusion devices (10), wherein each extrusion device (10) generates a layer of a plastic film, wherein the filling level thereof is reduced to a change filling level (WF) as preparation of the supply devices (20).

2. The method according to claim 1,
**characterized in**
**that** for the preparation of the supply devices (20) an outlet container (60) is cleaned and is fastened to a container interface (54) of the respective supply device (20).

3. The method according to any one of the preceding claims,
**characterized in**
**that** the steps of detecting, preparing, separating, discharging and/or filling are carried out automatically on the basis of a manual or an automatic activation.

4. The method according to claim 3,
**characterized in**
**that** after detecting the change request an analysis is made of all input materials (E) and all subsequent materials (EF), on the basis of which a change sequence is output, which specifies the implementation sequence for the individual extrusion devices (10) and/or the individual supply devices (20) of the extrusion devices (10).

5. The method according to any one of the preceding claims,
**characterized in**
**that** after the discharge of the input material (E) from the separated supply devices (20) a cleaning step is carried out, in particular, in the form of a cleaning program of a cleaning device (80).

6. The method according to any one of the preceding claims,
**characterized in**
**that** the subsequent material (EF), in particular in the form of a container supply, is brought to the extrusion device (10) as preparation of the supply devices (20) for the material change.

7. The method according to any one of the preceding claims,
**characterized in**
**that** for all supply devices (20) of an extrusion device (10) up to a last supply device (20) the material change is carried out temporally in parallel at least in sections.

8. The method according to any one of the preceding claims,
**characterized in**
**that** after the discharge of the input material (E) a completion signal is provided, which indicates the completion of the discharge to the operating personnel.

## Revendications

1. Procédé pour la réalisation d'un changement de matériau dans un dispositif d'extrusion (10) avec au moins deux dispositifs de modèles (20) pour la modèle d'une charge (E) pour une extrudeuse (30), comprenant les étapes suivantes :
- détection d'une demande de changement pour un changement de matériau lors du dispositif d'extrusion (10),
- préparation du dispositif de modèle (20) pour le changement de matériau,
- séparation d'au moins deux dispositifs de modèles (20) de l'introduction de la charge (E) dans l'extrudeuse (30),
- évacuation de la charge (E) hors des dispositifs de modèles (20) séparés,
- introduction de matériau suivant (EF) dans les dispositifs de modèles vides (20),
**caractérisé en ce que** les étapes sont exécutées dans une machine de production avec au moins quatre dispositifs d'extrusion (10), dans lequel chaque dispositif d'extrusion (10) génère une couche d'un film de matière plastique, dans lequel,
en préparation des dispositifs de modèles (20), leur niveau de remplissage est réduit à un niveau de remplissage de changement (WF).

2. Procédé selon la revendication 1,
**caractérisé en ce que**
pour la préparation des dispositifs de modèles (20), un récipient d'évacuation (60) est nettoyé et est fixé à une interface de récipient (54) du dispositif de modèle (20) correspondante.

3. Procédé selon l'une des revendications précédentes,
**caractérisé en ce que**
les étapes de détection, de préparation, de séparation, d'évacuation et/ou d'introduction sont exécutées automatiquement sur la base d'une activation manuelle ou automatique.

4. Procédé selon la revendication 3,
**caractérisé en ce que**
après la détection de la demande de changement, a lieu une analyse de toutes les charges (E) et de tous les matériaux suivants (EF), sur la base de laquelle une suite de changements est effectuée, qui impose l'ordre d'exécution pour les différents dispositifs d'extrusion (10) et/ou les différents dispositifs de modèles (20) des dispositifs d'extrusion (10).

5. Procédé selon l'une des revendications précédentes,
**caractérisé en ce que**
après l'évacuation de la charge (E) hors des dispositifs de modèles (20) séparés, une étape de nettoyage, plus particulièrement sous la forme d'un programme de nettoyage d'un dispositif de nettoyage (80).

6. Procédé selon l'une des revendications précédentes,
**caractérisé en ce que**
pour la préparation des dispositifs de modèles (20) pour le changement de matériau, le matériau suivant (EF) est introduit dans le dispositif d'extrusion (10), plus particulièrement sous la forme d'un modèle de récipient.

7. Procédé selon l'une des revendications précédentes,
**caractérisé en ce que**
pour tous les dispositifs de modèles (20) d'un dispositif d'extrusion (10), sauf un dernier dispositif de modèle (20), il est exécuté au moins à certains endroits en même temps que le changement de matériau.

8. Procédé selon l'une des revendications précédentes,
**caractérisé en ce que**
après l'évacuation de la charge (E), un signal de fin est émis qui indique au personnel opérateur la fin de l'évacuation.
